# EUROPÄISCHE PATENTSCHRIFT

(11) **EP 3 775 631 B1**
(45) Veröffentlichungstag und Bekanntmachung des Hinweises auf die Patenterteilung: **09.08.2023**
(21) Anmeldenummer: 19723692.0
(22) Anmeldetag: 29.04.2019
(51) Int. Cl.: F16J 15/00, F16J 15/43, F16J 15/44

(54) **ANORDNUNG, INSBESONDERE TURBOMASCHINE, UMFASSEND EINE WELLENDICHTUNGSEINRICHTUNG**
ARRANGEMENT, IN PARTICULAR TURBOMACHINE, COMPRISING A SHAFT SEAL ARRANGEMENT
DISPOSITIF, EN PARTICULIER TURBOMACHINE COMPRENANT UN DISPOSITIF FORMANT JOINT D'ÉTANCHÉITÉ D'ARBRE

(30) Priorität: 30.05.2018 EP 18175111
(43) Veröffentlichungstag der Anmeldung: 17.02.2021
(73) Patentinhaber: Siemens Energy Global GmbH & Co. KG, 81739 München (DE)
(72) Erfinder: GAUSMANN, Rainer, 47058 Duisburg (DE)
(86) Internationale Anmeldenummer: PCT/EP2019/060876
(87) Internationale Veröffentlichungsnummer: WO 2019/228729

(56) Entgegenhaltungen:
- WO-A1-92/13216
- AU-B2- 505 154
- JP-A- S6 272 966
- JP-A- S62 177 368
- JP-U- S59 144 261
- US-A- 4 797 013

## Beschreibung

Die Erfindung betrifft eine Anordnung, insbesondere Turbomaschine, umfassend
- eine Welle, die sich entlang einer Achse erstreckt,
- eine Wellendichtungseinrichtung zur Abdichtung eines Ringspaltes zwischen der Welle und einem Stator von einem Prozessfluidraum zur Umgebung,
- wobei die Wellendichtungseinrichtung eine Ferrofluidwellendichtung aufweist, wobei seitens des Prozessfluidraumes die Wellendichtungseinrichtung neben der Ferrofluidwellendichtung eine Zusatzwellendichtung umfasst,
- wobei die Ferrofluidwellendichtung an dem Ringspalt axial zwischen der ersten Wellendichtung und der Umgebung angeordnet ist, wobei an dem Ringspalt axial zwischen der Zusatzwellendichtung und der Ferrofluidwellendichtung eine Drucksenke vorgesehen ist.

Eine derartige Anordnung mit einer Wellendichtungseinrichtung ist bereits aus der WO 2014/146956 A1 bekannt.

Aus der WO 92/13216 A1 ist außerdem bereits bekannt,
- dass seitens des Prozessfluidraumes die Wellendichtungseinrichtung neben der Ferrofluidwellendichtung eine Zusatzwellendichtung umfasst,
- wobei die Ferrofluidwellendichtung an dem Ringspalt axial zwischen der ersten Wellendichtung und der Umgebung angeordnet ist,
- wobei an dem Ringspalt axial zwischen der Zusatzwellendichtung und der Ferrofluidwellendichtung eine Drucksenke vorgesehen ist.

Werden Turbomaschinen von Prozessfluiden durchströmt, ist es in der Regel erforderlich, eine mechanische Leistung mittels einer Welle aus einem mit einem Prozessfluid gefüllten Raum in die Umgebung zu übertragen. Zur Abgrenzung des mit dem Prozessfluid gefüllten Raums zur Umgebung ist ein Stator bzw. ein Gehäuse oder Druckbehälter vorgesehen, der im Bereich der Wellendurchführung eine Wellendichtung aufweist, die den Spalt zwischen der Welle und dem Stator abdichtet. Bei der Wellendichtungseinrichtung handelt es sich um eine Schlüsselkomponente, da auch bei hohen Rotationsgeschwindigkeiten eine nur minimale Leckage - teilweise bis zur vollkommenen Dichtheit - gewünscht ist. Eine Ausnahme von dem beschriebenen Prinzip stellt eine Turbomaschine mit einem integrierten Motor oder Generator dar, so dass die Strömungsarbeit direkt als elektrische Leistung über die Statorgrenze hinweg übertragen werden kann. Derartige Anordnungen sind vergleichsweise kostspielig und daher häufig nicht wirtschaftlich erfolgreich. Insbesondere bei gefährlichen, z. B. toxischen Fluiden ist eine sichere leckagefreie Abdichtung der Turbomaschine essentiell. Flüssigkeitsgeschmierte Dichtungen erfüllen regelmäßig annähernd derartige Anforderungen, wobei ein stets anfallender Verlust an Sperrfluid durch beispielsweise das vorbeiströmende Prozessfluid ausgeglichen werden muss. Der Nachschub von geeignetem Sperrfluid ist aufwendig und kostspielig und daher von dem Kunden nicht erwünscht bzw. minimal zu halten. Eine Möglichkeit, den Verlust an Sperrfluid zu minimieren, besteht mit dem Einsatz einer Ferrofluiddichtung, die eine Reduktion des Ferrofluids durch vorbeiströmendes Prozessfluid in Folge der zusätzlich aufgebrachten Magnetkräfte effektiv reduziert. Ein Nachteil der Ferrofluiddichtung besteht jedoch darin, dass die in Turbomaschinen allfälligen Druckdifferenzen regelmäßig zu hoch sind.

Ausgehend von den Problemen und Nachteilen des Standes der Technik hat sich die Erfindung die Aufgabe gesetzt, eine Wellendichtungseinrichtung für eine Turbomaschine bereitzustellen, die eine sehr geringe - bevorzugt nahezu gar keine - Leckage bei gleichzeitig verhältnismäßig geringen Betriebskosten aufweist.

Zur Lösung der Aufgabe wird erfindungsgemäß eine Anordnung der eingangs definierten Art mit den zusätzlichen Merkmalen des Kennzeichens des Hauptanspruchs vorgeschlagen.

Die Erfindung erreicht mittels der erfindungsgemäßen Kombination aus Ferrofluidwellendichtung und Zusatzwellendichtung sowie der dazwischen befindlichen Drucksenke die Möglichkeit, die Ferrofluidwellendichtung auch beispielsweise an Turbomaschinen mit hohen Maximaldrücken einzusetzen und auf diese Weise eine Alternative zu hermetischen Anordnungen ohne Wellendichtungen zu schaffen. Hierbei gelingt es der Erfindung nicht nur, eine Tauglichkeit für hohe Absolutdrücke in der Turbomaschine der Anordnung zu erreichen, sondern auch ein erhöhtes Maß an Sicherheit, indem als Zusatzwellendichtung insbesondere eine bewährte und ausfallsichere Konstruktion eingesetzt werden kann. Hier bietet sich insbesondere die Verwendung einer Labyrinthdichtung an, die infolge der Einfachheit ein Höchstmaß an Betriebssicherheit bietet. Insbesondere kann eine derartige Zusatzwellendichtung unabhängig von Hilfsenergiezuspeisungen ausgebildet sein. In diesem Sinne ist die Ferrofluidwellendichtung bevorzugt mittels eines Permanentmagneten magnetisiert, so dass auf diese Weise eine Unabhängigkeit von einer Hilfsenergie gegeben ist.

Bevorzugt weist die Ferrofluidwellendichtung ein Ferrofluid auf, bei dem in einer Trägerflüssigkeit kolloidial suspendierte Partikel aus Eisen und/oder Magnetit und/oder Kobalt vorgesehen sind. Alternativ oder zusätzlich kann das Ferrofluid als ionische Flüssigkeit ausgebildet sein, wobei sich die Ionen, Kationen oder Anionen in der Lösung magnetisch verhalten. Als Trägerflüssigkeit kommen im Stand der Technik bekannte verschiedene Möglichkeiten in Frage, beispielsweise Kohlenwasserstoffe bzw. Öle oder Wasser.

Erfindungsgemäß weist die Anordnung einen Ferrofluidvorratsbehälter auf, in dem Ferrofluid gespeichert ist. Dieser Ferrofluidvorratsbehälter steht mit Leitungen zur Zufuhr oder Ableitung des Ferrofluids zu der Ferrofluiddichtung in Verbindung. Auf diese Weise können Verluste an Ferrofluid im Bereich der Ferrofluiddichtung ausgeglichen werden und es kann eine Aufbereitung des Ferrofluids erfolgen, so dass etwaige Verunreinigungen oder sonstige Veränderungen des Ferrofluids rückgängig gemacht werden können. Daneben ist eine Aufbereitung im Sinne einer Kühlung des Ferrofluids bei erhöhten Reibungsverlusten, die nicht mittels einfacher Konvektion oder Wärmeleitung abgeführt werden können, sinnvoll. Bevorzugt dem Ferrofluidvorratsbehälter angegliedert ist hierbei eine Filterung und/oder eine Abscheidung für Verunreinigungen des Ferrofluids, eine Kühlung bzw. eine Temperierung und/oder eine Pumpe, die das Ferrofluid auf den benötigten Versorgungsdruck bringt.

Besonders zweckmäßig ist eine Ausbildung der Ferrofluiddichtung und des Lagers als ein kombiniertes Bauteil, wobei das Ferrofluid für das Lager als Schmiermittel vorgesehen ist. Die Ausbildung als ein kombiniertes Bauteil bedeutet, dass zumindest eine Fortsetzung des Bereichs der Welle, der der Lagerung dient, auch gleichzeitig der Bereich ist, an dem die Ferrofluiddichtung dichtet. Hierbei ist es grundsätzlich auch denkbar, dass das Lager ein Axiallager ist und die Ferrofluiddichtung einen sich in Axialrichtung erstreckenden Spalt abdichtet. Eine Kombination der Ferrofluiddichtung und des Lagers, das die Welle mittels eines Schmierfilms unterstützt, liegt im Sinne dieser Erfindung auch schon dann vor, wenn der Ferrofluidvorratsbehälter gleichzeitig auch der Vorratsbehälter für das Schmiermittel des Lagers ist bzw. das Ferrofluid gleichzeitig Sperrmedium für die Wellendichtung und Schmiermittel für das Lager ist. Hierbei ist es zweckmäßig, wenn eine Aufbereitungseinheit, die mit dem Ferrofluidbehälter in Verbindung steht, eine Pumpe aufweist, die einen Versorgungsdruck für die Ferrofluiddichtung und die Zufuhr des Ferrofluids zu dem Lager als Schmiermittel bereit stellt. Hierbei ist es sinnvoll, wenn die Zufuhr des Ferrofluids zu der Ferrofluiddichtung mit einem ersten Druck erfolgt und die Zufuhr des Ferrofluids als Schmiermittel zu dem Lager mit einem zweiten Druck erfolgt, der unterschiedlich zu dem ersten Druck ist. Diese unterschiedlichen Drücke lassen sich entweder mittels zwei unterschiedlicher Pumpen erzeugen oder bevorzugt mittels mindestens einer bevorzugt verstellbaren Drossel in mindestens einer Zuführleitung zu dem Lager und oder der Ferrofluiddichtung.

Im Folgenden ist die Erfindung anhand eines speziellen Ausführungsbeispiels unter Bezugnahme auf Zeichnungen näher erläutert. Es zeigen:
- Figur 1:: eine schematische Darstellung eines Längsschnitts durch eine erfindungsgemäße Anordnung, nämlich eine Turbomaschine,
- Figur 2:: eine schematische Darstellung einer nicht erfindungsgemäßen Wellendichtungseinrichtung
- Figur 3:: eine schematische Darstellung einer erfindungsgemäßen Wellendichtungseinrichtung.

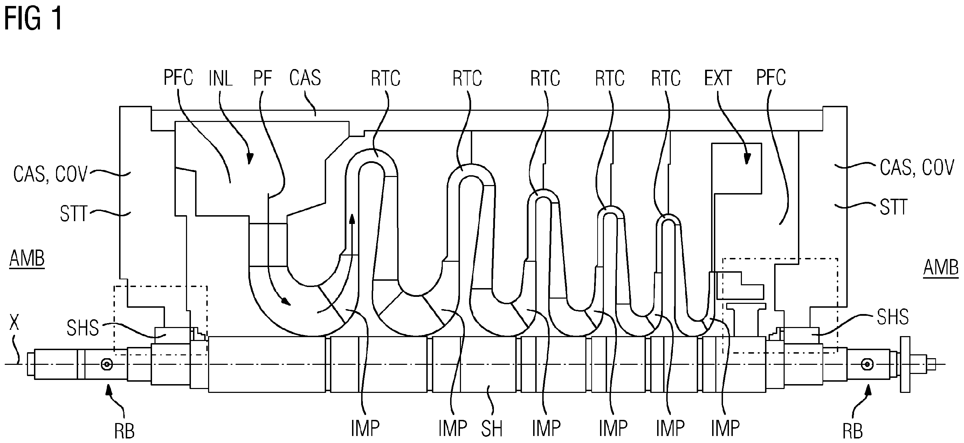

Figur 1 zeigt eine schematische Darstellung eines Längsschnitts durch eine Turbomaschine TM. Die Turbomaschine TM ist als eine erfindungsgemäße Anordnung AR ausgebildet und umfasst eine Welle SH, die sich entlang einer Achse X erstreckt. Eine Wellendichtungseinrichtung SHS zur Abdichtung eines Ringspalts GP zwischen der Welle SH und einem Stator STT ist vorgesehen, um einen Prozessfluidraum PFC zur Umgebung AMB gegen einen Austritt von Prozessfluid PF abzudichten. In dem konkreten Fall handelt es sich bei dem Stator STT um einen Teil eines Gehäuses CAS bzw. eines Druckbehälters, der den erhöhten Druck gegenüber der Umgebung AMB des Prozessfluids PF im Inneren hält. Das Gehäuse CAS weist axial beidseitig jeweils einen Deckel COV auf, der Bestandteil des Gehäuses CAS bzw. des Stators STT ist. Grundsätzlich sind Begriffe wie axial, radial, tangential oder Umgebungsrichtung bezogen auf die Achse X der Welle SH. Die Turbomaschine TM der Figur 1 ist als Turboverdichter in radialer Bauweise ausgebildet. Im Inneren des Gehäuses CAS befindet sich eine Zuströmung INL und eine Abströmung EXT. Im Strömungspfad zwischen der Zuströmung INL und der Abströmung EXT sind radiale Verdichterstufen in Form von Laufrädern IMP vorgesehen, die das Prozessfluid PF axial ansaugen und nach radial außen beschleunigen. Zwischen den einzelnen Laufrädern IMP befinden sich Rückführstufen RTC, die das Prozessfluid von radial au-ßen nach radial innen umlenken und dem nachfolgenden Laufrad axial zuführen. Die Welle SH ist von Lagern RB gestützt, die hier als Radiallager ausgebildet sind und die Welle SH in einer bestimmten Radialposition halten. Eine axiale Lagerung ist nicht abgebildet aber vorgesehen. Linksseitig der Turbomaschine TM in der Figur 1 befindet sich die Saugseite, wo sich auch die Zuströmung INL befindet und rechtsseitig die Druckseite mit der Abströmung EXT. Naturgemäß ist bei einem Verdichter die Druckseite durch einen höheren Druck des Prozessfluids in dem Strömungspfad belastet.

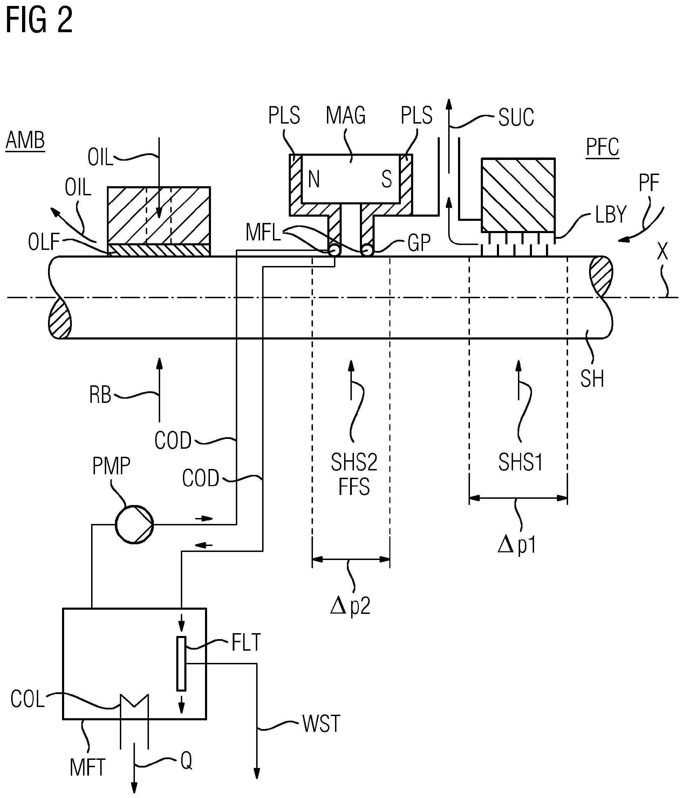

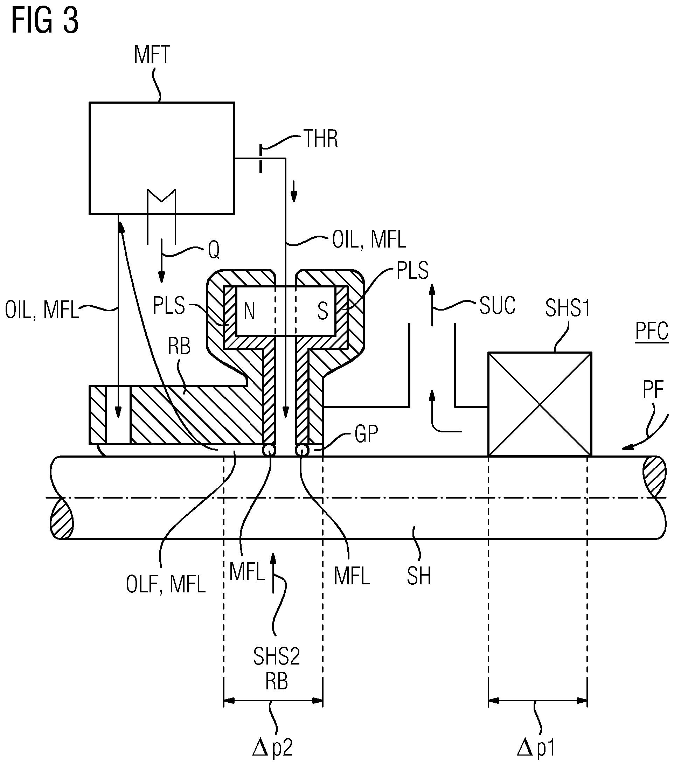

In den Figuren 2, 3 ist jeweils eine schematische Darstellung der Wellendichtungseinrichtung SHS und der Lager RB wiedergegeben. Die schematischen Darstellungen beschränken sich auf eine linksseitige Axialseite einer Turbomaschine TM. Grundsätzlich ist eine im Wesentlichen spiegelverkehrte Ausbildung zur rechtsseitigen Anordnung bei einer Turbomaschine ebenso möglich.

Die Figuren 2 und 3 zeigen einen Ausschnitt der Welle SH, die sich entlang der Achse X erstreckt. Der Fokus der Darstellung ist die Wellendichtungseinrichtung SHS. Die Wellendichtungseinrichtung SHS umfasst eine erste Wellendichtung SHS1 und eine zweite Wellendichtung SHS2. Die zweite Wellendichtung ist jeweils als eine Ferrofluidwellendichtung FFS ausgebildet. Die erste Wellendichtung SHS1 kann im Grunde jede konventionelle Wellendichtung sein und ist in der Figur 2 exemplarisch als die bevorzugte Ausführungsart einer Labyrinthdichtung LBY angegeben. Naturgemäß hat die konventionelle erste Wellendichtung SHS eine Leckage, die die erste Wellendichtung SHS1 von dem Inneren des Prozessfluidraums PFC in Richtung der Umgebung AMB durchströmt. Die erste Wellendichtung SHS1 baut eine erste Druckdifferenz Δp1 ab, wobei der Enddruck der ersten Druckdifferenz Δp1 durch den Druck einer Drucksenke SUC bestimmt ist. Bevorzugt ist die Drucksenke SUC mittels einer Leitung mit der Saugseite bzw. der Zuströmung INL der Turbomaschine TM verbunden. Diese Verbindung ist hier nicht dargestellt. Die verbleibende zweite Druckdifferenz Δp2 zur Umgebung AMB wird mittels einer zweiten Wellendichtung SHS2 abgedichtet, wobei die zweite Wellendichtung SHS2 als Ferrofluidwellendichtng FFS ausgebildet ist. Die Ferrofluidwellendichtung FFS weist einen Permanentmagneten MAG auf, der mittels Polschuhe PLS das Magnetfeld in den Bereich eines Ringspaltes GP zwischen der Ferrofluidwellendichtung FFS und der Welle SH überträgt. In dem Spalt GP ist ein Ferrofluid MFL als Bestandteil der Ferrofluidwellendichtung FFS vorgesehen. Das Ferrofluid MFL wird durch das von dem Permanentmagneten MAG erzeugte und mittels der Polschuhe PLS in den Bereich des Spaltes GP übertragene Magnetfeld an Ort und Stelle gehalten, so dass eine Dichtwirkung die zweite Druckdifferenz Δp2 aufrecht erhält. Mittels Leitungen COD steht die Ferrofluidwellendichtung FFS mit einem Ferrofluidvorratsbehälter MFT in Verbindung, so dass eine Zu- und Abfuhr von Ferrofluid MFL in den Bereich des Ringspaltes GP erfolgt. Dem Ferrofluidvorratsbehälter MFT ist eine Vorrichtung zur Aufbereitung des Ferrofluids MFL angegliedert. Diese Aufbereitungsvorrichtung umfasst einen Filter FLT, einen Kühler COL, der Abwärme Q abführt, wobei der Filter FLT das abgeschiedene Retentat WST aus dem Ferrofluid MFL entfernt. Weiterhin umfasst die Aufbereitung eine Förderung des Ferrofluids MFL auf einen höheren Versorgungsdruck mittels einer Pumpe PMP, so dass eine Zirkulation des Ferrofluids MFL gewährleistet ist.

In dem nicht erfindungsgemäßen Ausführungsbeispiel der Figur 2 ist ein ölgeschmiertes Lager RB vorgesehen, das die Welle SH mittels eines Ölfilms OLF unterstützt. In üblicher Art unterliegt das Schmiermittel OIL des Ölfimls OLF einem permanenten Austausch zur Aufbereitung (Druckerhöhung, Filterung, Kühlung.... ).

Da sich die Aufbereitung des Schmiermittels OIL des Lagers RB und die Aufbereitung des Ferrofluids MFL ähneln, ist in Figur 3 eine Kombination des Lagers RB und der zweiten Wellendichtung SHS2 bzw. der Ferrofluidwellendichtung FFS dargestellt.

In dem erfindungsgemäßen Ausführungsbeispiel werden sowohl die Ferrofluidwellendichtungen FFS als auch das Lager RB mit Ferrofluid MFL versorgt, das gleichzeitig die Eigenschaften des Schmiermittels OIL aufweist. In nicht dargestellter Weise ist in einer Aufbereitungseinheit des Ferrofluidvorratsbehälters MFT eine Pumpe vorgesehen, die das Ferrofluid MFL auf einen Versorgungsdruck befördert. Da der Versorgungsdruck für die Ferrofluiddichtung niedriger ist als für das Lager RB, ist in der Zuführleitung zu der Ferrofluiddichtung FFS eine Drossel THR vorgesehen. Grundsätzlich ist es zweckmäßig, in allen Zuführleitungen verstellbare Drosseln THR vorzusehen und den Betriebsdruck entsprechend anzupassen. Der Abbau der zweiten Druckdifferenz Δp2 erfolgt nun unmittelbar im Bereich des Lagers RB mittels der dort integrierten Ferrofluidwellendichtung FFS. Der abzudichtende Ringspalt GP ist hierbei unmittelbare Fortsetzung eines Lagerspaltes des Lagers RB. Diese Anordnung sorgt für eine besondere Kompaktheit, da der Raumbedarf für Lager und Ferrofluiddichtung in der Kombination geringer ist als in Einzelausführung. Gleichzeitig ist die besonders kostspielige Bereitstellung von zwei unterschiedlichen Betriebsmedien (Schmieröl OIL, Ferrofluid MFL) reduziert worden auf ein einziges Betriebsmittel (Ferrofluid MFL), das gleichzeitig als Sperrfluid und als Schmiermedium Einsatz findet. Dementsprechend zeigt die Figur 3 ein Verfahren zum Betrieb einer Anordnung gemäß der Erfindung, wobei ein Lager und eine Ferrofluiddichtung mit dem gleichen Betriebsmedium versorgt werden, um einerseits den Schmierfilm in dem Lager aufrecht zu erhalten und andererseits die Sperrwirkung der Ferrofluiddichtung FFS zu erzeugen.

## Patentansprüche

1. Anordnung (AR), insbesondere Turbomaschine (TM), umfassend
- eine Welle (SH), die sich entlang einer Achse (X) erstreckt,
- eine Wellendichtungseinrichtung (SHS) zur Abdichtung eines Ringspaltes (GP) zwischen der Welle (SH) und einem Stator (STT) von einem Prozessfluidraum (PFC) zur Umgebung (AMB),
- wobei die Wellendichtungseinrichtung (SHS) eine Ferrofluidwellendichtung (FFS) aufweist,
- wobei seitens des Prozessfluidraumes die Wellendichtungseinrichtung (SHS) neben der Ferrofluidwellendichtung (FFS) eine Zusatzwellendichtung (SHS1) umfasst,
- wobei die Ferrofluidwellendichtung (FFS) an dem Ringspalt (GP) axial zwischen der ersten Wellendichtung (SHS1) und der Umgebung (AMB) angeordnet ist,
- wobei an dem Ringspalt (GP) axial zwischen der Zusatzwellendichtung (SHS1) und der Ferrofluidwellendichtung (FFS) eine Drucksenke (SUC) vorgesehen ist
**dadurch gekennzeichnet,**
- **dass** die Anordnung (AR) einen Ferrofluidvorratsbehälter (MFT) umfasst, in dem Ferrofluid (MFL) gespeichert ist und wobei der Ferrofluidvorratsbehälter (MFT) mit der Ferrofluiddichtung (FFS) mittels Leitungen zur Zu- und/oder Ableitung des Ferrofluids (MFL) verbunden ist,
wobei die Anordnung (AR) mindestens ein Lager (RB) zur Unterstützung der Welle (SH) aufweist.
- wobei die Anordnung (AR) eine Aufbereitungsanlage umfasst, die dazu ausgebildet ist, mittels Zuleitungen zur Ferrofluiddichtung (FFS) das Ferrofluid (MFL) mit einem ersten Druck der Ferrofluiddichtung (FFS) zuzuleiten und mit einem zweiten Druck, der unterschiedlich ist zu dem ersten Druck, dem Lager (RB) das Ferrofluid (MFL) als Schmiermittel (OIL) zuzuleiten.

2. Anordnung (AR) nach Anspruch 1,
wobei die erste Wellendichtung (SHS1) als Labyrinthdichtung (LBY) ausgebildet ist.

3. Anordnung (AR) nach mindestens einem der vorhergehenden Ansprüche 1, 2,
wobei die Ferrofluidwellendichtung (FFS) ein Ferrofluid (MFL) umfassend, umfassend kolloidial in einer Trägerflüssigkeit suspendierte Partikel aus Eisen und/oder Magnetit und/oder Kobalt.

4. Anordnung (AR) nach mindestens einem der vorhergehenden Ansprüche 1 - 3,
wobei die Anordnung (AR) Vorrichtungen zur Aufbereitung des Ferrofluids (MFL) aufweist, insbesondere eine Kühlung (COL) und/oder einen Filter (FLT) und/oder einen Abscheider (SEP).

5. Anordnung (AR) nach einem der vorhergehenden Ansprüche, wobei die Ferrofluiddichtung (FFS) und das Lager (RB) als ein kombiniertes Bauteil ausgebildet sind

## Claims

1. Assembly (AR), in particular a turbomachine (TM), comprising
- a shaft (SH), which extends along an axis (X),
- a shaft seal device (SHS) for sealing an annular gap (GP) between the shaft (SH) and a stator (STT) in order to seal a process fluid chamber (PFC) in relation to the environment (AMB),
- wherein the shaft seal device (SHS) has a ferrofluid shaft seal (FFS),
- wherein, at the process fluid chamber, the shaft seal device (SHS) comprises an additional shaft seal (SHS1) in addition to the ferrofluid shaft seal (FFS),
- wherein the ferrofluid shaft seal (FFS) is arranged at the annular gap (GP) axially between the first shaft seal (SHS1) and the environment (AMB),
- wherein a pressure sink (SUC) is provided at the annular gap (GP) axially between the additional shaft seal (SHS1) and the ferrofluid shaft seal (FFS),
**characterized**
- **in that** the assembly (AR) comprises a ferrofluid storage container (MFT), in which ferrofluid (MFL) is stored, and wherein the ferrofluid storage container (MFT) is connected to the ferrofluid seal (FFS) by lines to the supply and/or discharge line of the ferrofluid (MFL),
wherein the assembly (AR) has at least one bearing (RB) for supporting the shaft (SH),
- wherein the assembly (AR) comprises a conditioning system which is designed, by means of supply lines to the ferrofluid seal (FFS), to supply the ferrofluid (MFL) at a first pressure to the ferrofluid seal (FFS) and to supply the ferrofluid (MFL) to the bearing (RB) as lubricant (OIL) at a second pressure, which is different from the first pressure.

2. Assembly (AR) according to Claim 1,
wherein the first shaft seal (SHS1) is designed as a labyrinth seal (LBY).

3. Assembly (AR) according to at least one of the preceding Claims 1, 2,
wherein the ferrofluid shaft seal (FFS) comprises a ferrofluid (MFL) comprising particles of iron and/or magnetite and/or cobalt suspended colloidally in a carrier liquid.

4. Assembly (AR) according to at least one of the preceding Claims 1 - 3,
wherein the assembly (AR) has devices for conditioning the ferrofluid (MFL), in particular a cooling means (COL) and/or a filter (FLT) and/or a separator (SEP).

5. Assembly (AR) according to one of the preceding claims,
wherein the ferrofluid seal (FFS) and the bearing (RB) are designed as a combined component.

## Revendications

1. Dispositif (AR), en particulier turbomachine (TM), comprenant
- un arbre (SH), qui s'étend suivant un axe (X),
- un dispositif (SHS) d'étanchéité d'arbre pour rendre étanche un intervalle (GP) annulaire entre l'arbre (SH) et un stator (STT) d'un espace (PFC) pour le fluide de processus à l'environnement (AMB),
- dans lequel le dispositif (SHS) d'étanchéité d'arbre a une étanchéité (FFS) d'arbre au ferrofluide,
- dans lequel, du côté de l'espace pour le fluide de processus, le dispositif (SHS) d'étanchéité d'arbre comprend, outre l'étanchéité (FFS) d'arbre au ferrofluide, une étanchéité (SHS1) d'arbre supplémentaire,
- dans lequel l'étanchéité (FFS) au ferrofluide est disposée sur l'intervalle (GP) annulaire axialement entre la première étanchéité (SHS1) d'arbre et l'environnement (AMB),
- dans lequel il est prévu un puits (SUC) de pression sur l'intervalle (GP) annulaire axialement entre l'étanchéité (SHS1) d'arbre supplémentaire et l'étanchéité (FFS) d'arbre au ferrofluide,
**caractérisé en ce que**
- le dispositif (AR) comprend un réservoir (MFT) de ferrofluide, dans lequel du ferrofluide (MFL) stocké, et dans lequel le réservoir (MFT) de ferrofluide communique avec l'étanchéité (FFS) au ferrofluide au moyen de conduits pour apporter / évacuer le ferrofluide (MFL),
dans lequel le dispositif (AR) a au moins un palier (RB) pour soutenir l'arbre (SH),
- dans lequel le dispositif (AR) comprend une installation de traitement, qui est constituée pour envoyer, au moyen de conduits d'apport, à l'étanchéité (FFS) au ferrofluide, le ferrofluide (MFL) sous une première pression de l'étanchéité (FFS) au ferrofluide et pour envoyer, comme lubrifiant (OIL), le ferrofluide (MFL) au palier (RB) sous une deuxième pression, qui est différente de la première pression.

2. Dispositif (AR) suivant la revendication 1,
dans lequel la première étanchéité (SHS1) d'arbre est constituée sous la forme d'une étanchéité (LBY) en labyrinthe.

3. Dispositif (AR) suivant l'une des revendications 1, 2 précédentes,
dans lequel l'étanchéité (FFS) d'arbre au ferrofluide, comprenant du ferrofluide (MFL) comprend des particules de fer et/ou de magnétite et/ou de cobalt en suspension colloidalement dans un liquide support.

4. Dispositif (AR) suivant au moins l'une des revendications 1 à 3 précédentes,
dans lequel le dispositif (AR) a des systèmes de traitement du ferrofluide (MFL), en particulier un refroidissement (COL) et/ou un filtre (FLT) et/ou un séparateur (SEP).

5. Dispositif (AR) suivant au moins l'une des revendications précédentes,
dans lequel l'étanchéité (FFS) au ferrofluide et le palier (RB) sont constitués sous la forme d'une pièce combinée.
